(19) Europäisches Patentamt
European Patent Office
Office européen des brevets

(11) EP 4 614 586 A1

(12) EUROPEAN PATENT APPLICATION

(43) Date of publication:
10.09.2025 Bulletin 2025/37

(21) Application number: 25162414.4

(22) Date of filing: 07.03.2025

(51) International Patent Classification (IPC):
$H01M\ 4/131^{(2010.01)}$ $H01M\ 4/505^{(2010.01)}$
$H01M\ 4/525^{(2010.01)}$ $H01M\ 10/0525^{(2010.01)}$
$C01G\ 53/50^{(2025.01)}$ $H01M\ 4/04^{(2006.01)}$

(52) Cooperative Patent Classification (CPC):
H01M 4/525; C01G 53/50; H01M 4/0447;
H01M 4/131; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.03.2024 KR 20240033192
05.03.2025 KR 20250028013

(71) Applicant: SK On Co., Ltd.
Seoul 03161 (KR)

(72) Inventors:
• PARK, Hye Jin
Daejeon 34124 (KR)
• NOH, Mi Jung
Daejeon 34124 (KR)
• DO, Young Hoon
Daejeon 34124 (KR)
• KIM, Hong Ki
Daejeon 34124 (KR)

(74) Representative: Stolmár & Partner
Patentanwälte PartG mbB
Blumenstraße 17
80331 München (DE)

(54) LITHIUM SECONDARY BATTERY

(57) A lithium secondary battery according to the embodiments of the present disclosure includes: a cathode which includes a cathode active material layer including a cathode active material containing lithium-nickel-based metal oxide particles; and an anode disposed to face the cathode, wherein the lithium-nickel-based metal oxide particles have a crystallite strain ($\varepsilon$) of 0.2 to 0.4, which is calculated by applying the Williamson-Hall method defined a predetermined equation to peaks of (101) plane, (102) plane, (104) plane, (105) plane and (107) plane of the lithium-nickel-based metal oxide particles measured through XRD analysis on the cathode active material layer. Accordingly, capacity characteristics and lifespan characteristics of the lithium secondary battery are improved.

[FIG. 1]

EP 4 614 586 A1

**Description**

[BACKGROUND OF THE INVENTION]

1. Field of the Invention

The present disclosure relates to a lithium secondary battery, and more specifically, to a cathode which includes a cathode active material containing lithium-nickel-based metal oxide particles and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. In addition, a battery pack including the secondary battery has also been developed and applied to an eco-friendly automobile such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight.

For example, the lithium secondary battery may include: an electrode assembly including a cathode, an anode, and a separation membrane (separator); and an electrolyte in which the electrode assembly is impregnated. The lithium secondary battery may further include, for example, a pouch-shaped outer case in which the electrode assembly and the electrolyte are housed.

The lithium secondary battery may store an electric energy by a difference in chemical potential when lithium ions are intercalated and deintercalated between the cathode and the anode. Accordingly, the lithium secondary battery may use materials capable of reversibly intercalating and deintercalating the lithium ions as a cathode active material and an anode active material.

For example, a lithium-metal composite oxide may be used as the cathode active material, and examples of the lithium-metal composite oxide may include a lithium-nickel-based metal oxide. In the lithium-nickel-based metal oxide, a content of nickel may be increased to implement high energy density.

[SUMMARY OF THE INVENTION]

An object of the present disclosure is to provide a lithium secondary battery having improved capacity characteristics and lifespan characteristics.

To achieve the above object, according to an aspect of the present disclosure, there is provided a lithium secondary battery including: a cathode which includes a cathode active material layer including a cathode active material containing lithium-nickel-based metal oxide particles; and an anode disposed to face the cathode, wherein the lithium-nickel-based metal oxide particles have a crystallite strain ($\varepsilon$) of 0.2 to 0.4, which is calculated by applying the Williamson-Hall method defined by Equation 1 below to peaks of (101) plane, (102) plane, (104) plane, (105) plane and (107) plane of the lithium-nickel-based metal oxide particles measured through XRD analysis on the cathode active material layer:

$$[\text{Equation 1}]$$

$$\beta\cos\theta = \varepsilon\sin\theta + \lambda/D$$

In Equation 1, $\beta$ may be a full width at half maximum (rad) of the corresponding peak acquired through the XRD analysis, $\theta$ may be a diffraction angle (rad), $\varepsilon$ may be the crystallite strain (dimensionless number), $\lambda$ may be an X-ray wavelength (Å), and D may be a crystallite size (Å).

In some embodiments, the crystallite strain of the lithium-nickel-based metal oxide particles may be a slope of a straight line obtained when plotting $\sin\theta$ on a horizontal axis and $\beta\cos\theta$ on a vertical axis in Equation 1, by acquiring full width at half maximum values of the peaks from the (101) plane, (102) plane, (104) plane, (105) plane and (107) plane appearing through the XRD analysis, and substituting the acquired full width at half maximum values into Equation 1 above.

In some embodiments, the crystallite strain of the lithium-nickel-based metal oxide particles may range from 0.25 to 0.38.

In some embodiments, the lithium-nickel-based metal oxide particles may have a structure represented Formula 1 below:

[Formula 1]       $Li_xNi_{1-y}M_yO_{2+z}$

In Formula 1, x may satisfy $0.95 \leq x \leq 1.1$, y may satisfy $0 \leq y \leq 0.7$, z may satisfy $-0.1 \leq z \leq 0.1$, and M may be at least one element of Na, Mg, Ca, Y, Ti, Sr, Hf, V, Nb, Ta, Cr, Mo, W, Mn, Co, Fe, Cu, Ag, Zn, B, Al, Ga, C, Si, Sn and Zr.

In some embodiments, in Formula 1, (1-y) may range from 0.6 to 1.

In some embodiments, in Formula 1, M may include Mn.

In some embodiments, the lithium-nickel-based metal oxide particles may have a structure represented by Formula 2 below:

[Formula 2]       $Li_aNi_{1-b-c-d}Co_bMn_cJ_dO_{2+e}$

In Formula 2, a may satisfy $0.95 \leq a \leq 1.1$, b may satisfy $0 \leq b \leq 0.1$, c may satisfy $0 \leq c \leq 0.4$, d may satisfy $0 \leq d \leq 0.2$, e may satisfy $-0.1 \leq e \leq 0.1$, and J may be at least one element of Na, Mg, Ca, Y, Ti, Sr, Hf, V, Nb, Ta, Cr, Mo, W, Fe, Cu, Ag, Zn, B, Al, Ga, C, Si, Sn and Zr.

In some embodiments, in Formula 2, (1-b-c-d) may range from 0.6 to 1.

In some embodiments, in Formula 2, b may range from 0 to 0.02.

In some embodiments, in Formula 2, c may range from 0.05 to 0.35.

In some embodiments, in Formula 2, c may range from 0.2 to 0.33.

In some embodiments, in Formula 2, (1-b-c-d)/c may be greater than 1.

In the lithium secondary battery according to exemplary embodiments, a cathode active material containing lithium-nickel-based metal oxide particles having a crystallite strain of 0.2 to 0.4, which is calculated by applying the Williamson-Hall method defined by a predetermined equation to predetermined XRD peaks measured through XRD analysis may be included in the cathode. Accordingly, the capacity characteristics and lifespan characteristics of the lithium secondary battery may be improved.

In some embodiments, the lithium-nickel-based metal oxide particles may have a low content of cobalt and high contents of nickel and manganese. When the crystallite strain is controlled to 0.2 to 0.4, manganese contained in the lithium-nickel-based metal oxide particles may be electrochemically activated, thereby improving discharge capacity of the battery.

The cathode active material may be widely applied to green technology fields such as an electric vehicle, and a battery charging station, as well as other solar power generation and wind power generation using the batteries. The lithium secondary battery may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIGS. 1 and 2 are a schematic plan view and a cross-sectional view of a rechargeable lithium battery according to exemplary embodiments, respectively.

FIGS. 3A to 3D are graphs illustrating slopes acquired through linear regression analysis by applying the Williamson-Hall method to peak values of (101) plane, (102) plane, (104) plane, (105) plane and (107) plane of lithium-nickel-based metal oxide particles, which are acquired by performing XRD analysis on cathode active material layers according to Examples 3 and 4, and Comparative Examples 1 and 2, respectively; and

FIG. 4 is a graph illustrating capacity retention rates of lithium secondary batteries according to Examples 1 and 2, and Comparative Examples 1 and 2.

[DETAILED DESCRIPTION OF THE INVENTION]

Embodiments of the present disclosure provide a lithium secondary battery containing lithium-nickel-based metal oxide particles having a crystallite strain in a predetermined range as a cathode active material.

Hereinafter, the embodiments of the present disclosure will be described in detail with reference to the accompanying drawings. However, these embodiments are merely an example, and the present disclosure is not limited to the specific embodiments described as the example.

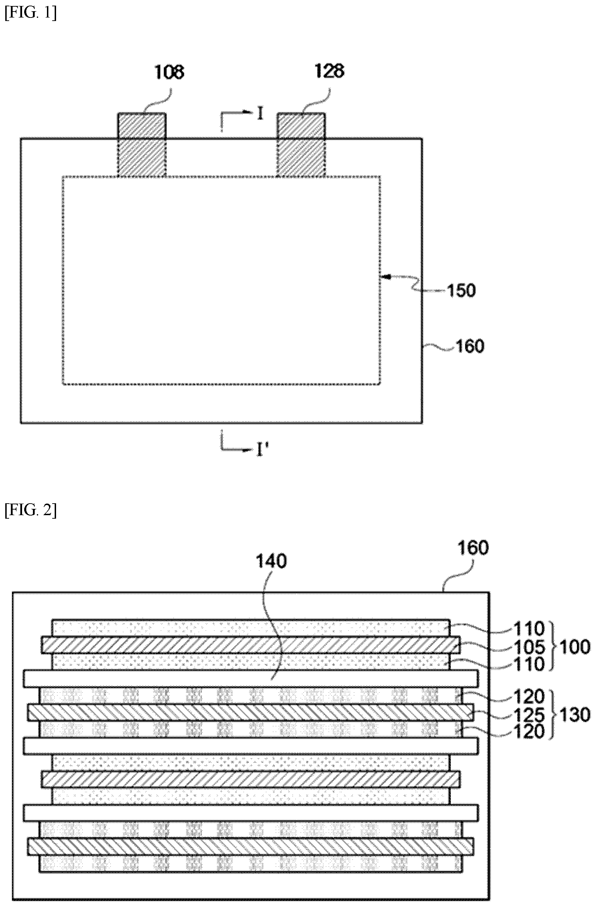

FIGS. 1 and 2 are a schematic plan view and a cross-sectional view illustrating a lithium secondary battery according to exemplary embodiments, respectively. FIG. 2 is a cross-sectional view taken on line I-I' of FIG. 1.

Referring to FIGS. 1 and 2, the lithium secondary battery may include a cathode 100 and an anode 130 disposed to face the cathode 100.

The cathode 100 may include a cathode active material layer 110 formed by applying a cathode active material to a cathode current collector 105. The cathode active material may include a compound capable of reversibly intercalating and deintercalating lithium ions.

In exemplary embodiments, the cathode active material may include lithium-nickel-based metal oxide particles. For example, the lithium-nickel-based metal oxide particles may further include at least one of cobalt (Co) and manganese (Mn).

In some embodiments, the lithium-nickel-based metal oxide particles may have a structure represented Formula 1 below.

[Formula 1] $\quad\quad$ $Li_xNi_{1-y}M_yO_{2+z}$

In Formula 1, x may satisfy $0.95 \leq x \leq 1.1$, y may satisfy $0 \leq y \leq 0.7$, z may satisfy $-0.1 \leq z \leq 0.1$, and M may be at least one element of Na, Mg, Ca, Y, Ti, Sr, Hf, V, Nb, Ta, Cr, Mo, W, Mn, Co, Fe, Cu, Ag, Zn, B, Al, Ga, C, Si, Sn and Zr.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one selected from the group consisting of Na, Mg, Ca, Y, Ti, Sr, Hf, V, Nb, Ta, Cr, Mo, W, Fe, Cu, Ag, Zn, B, Al, Ga, C, Si, Sn and Zr. For example, the auxiliary element may also act as an auxiliary active element which contributes to the capacity/output activity of the cathode active material together with Co or Mn.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The above coating element or doping element may exist on the surface of the lithium-nickel-based metal oxide particles, or may penetrate through the surface of the lithium-nickel-based metal oxide particles to be included in the bonding structure represented by Formula 1 above.

In some embodiments, in Formula 1, a molar ratio or a concentration (1-y) of Ni may range from 0.6 to 1, for example, from 0.65 to 1, from 0.7 to 1, from 0.75 to 1, from 0.62 to 0.95, from 0.65 to 0.9, or from 0.7 to 0.85.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and lifespan stability of the cathode or the secondary battery may be relatively decreased, and a side reaction with the electrolyte may also be increased. However, according to exemplary embodiments, the lifespan stability and capacity retention characteristics may be improved through Mn while maintaining electrical conductivity by including Co.

In some embodiments, in Formula 1, M may include Mn, and for example, M may be composed of Mn. For example, when decreasing the content of expensive Co, the contents of Ni and Mn may be further increased to improve capacity characteristics, thermal stability and structural stability.

In some embodiments, the lithium-nickel-based metal oxide particles may have a structure represented by Formula 2 below.

[Formula 2] $\quad\quad$ $Li_aNi_{1-b-c-d}Co_bMn_cJ_dO_{2+e}$

In Formula 2, a may satisfy $0.95 \leq a \leq 1.1$, b may satisfy $0 \leq b \leq 0.1$, c may satisfy $0 \leq c \leq 0.4$, d may satisfy $0 \leq d \leq 0.2$, e may satisfy $-0.1 \leq e \leq 0.1$, and J may be at least one element of Na, Mg, Ca, Y, Ti, Sr, Hf, V, Nb, Ta, Cr, Mo, W, Fe, Cu, Ag, Zn, B, Al, Ga, C, Si, Sn and Zr.

In some embodiments, in Formula 2, the molar ratio or concentration (1-b-c-d) of Ni may range from 0.6 to 1, for example, from 0.65 to 1, from 0.7 to 1, from 0.75 to 1, from 0.62 to 0.95, from 0.65 to 0.9, or from 0.7 to 0.85.

In some embodiments, in Formula 2, a molar ratio or a concentration b of Co may range from 0 to 0.02, for example, from 0 to 0.01, or may be 0. Since Co is a rare and expensive element, when reducing the content of Co, the battery may be more economically manufactured.

In some embodiments, in Formula 2, a molar ratio or a concentration c of Mn may range from 0.05 to 0.35, for example, from 0.2 to 0.33, from 0.22 to 0.32, from 0.25 to 0.31, or from 0.25 to 0.3.

For example, although it is difficult to implement high capacity characteristics through Mn, when electrochemically activating Mn, initial efficiency and discharge capacity of the battery may be improved. Accordingly, even if reducing the content of Co, the lifespan stability and capacity retention characteristics may be improved by increasing the content of Mn.

In some embodiments, in Formula 2, (1-b-c-d)/c, which is a ratio of the molar ratio or concentration of Ni to the molar ratio or concentration of Mn, may be greater than 1, for example, greater than 2. Accordingly, in a lithium secondary battery, not only high-capacity and high-power characteristics but also improved thermal stability and structural stability may be implemented.

In exemplary embodiments, the lithium-nickel-based metal oxide particles may have a crystallite strain ($\varepsilon$) of 0.2 to 0.4, which is calculated by applying the Williamson-Hall method defined by Equation 1 below to peaks of (101) plane, (102) plane, (104) plane, (105) plane and (107) plane of the lithium-nickel-based metal oxide particles measured through XRD analysis on the cathode active material layer.

[Equation 1]

$$\beta\cos\theta = \varepsilon\sin\theta + \lambda/D$$

In Equation 1, $\beta$ may be a full width at half maximum (rad) of the corresponding peak acquired through the XRD analysis, $\theta$ may be a diffraction angle (rad), $\varepsilon$ may be the crystallite strain (dimensionless number), $\lambda$ may be an X-ray wavelength (Å), and D may be a crystallite size (Å).

For example, XRD peaks of the cathode active material particles may be acquired through X-ray diffraction (XRD) analysis on the cathode active material layer, and the crystallite strain of the cathode active material particles may be acquired by applying the Williamson-Hall method defined by Equation 1 to the acquired peaks. For example, the XRD peaks may be peaks of the (101) plane, (102) plane, (104) plane, (105) plane and (107) plane of the lithium-nickel-based metal oxide particles.

In some embodiments, in Equation 1, $\beta$ may use full width at half maximum corrected for a value derived from equipment. In one embodiment, Si may be used as a standard material for reflecting the equipment-derived value. In this case, by plotting full width at half maximum profiles in a full range of $2\theta$ of Si, the equipment-derived full width at half maximum may be represented as a function of $2\theta$. Thereafter, a value corrected by subtracting the equipment-derived full width at half maximum value in the corresponding $2\theta$ obtained from the function may be used as $\beta$.

For example, the XRD analysis may be performed by using Cu-K$\alpha$ rays as a light source for the dried powder of lithium-nickel-based metal oxide particles in a diffraction angle ($2\theta$) range of 10° to 120° at a scan rate of 0.0065°/step.

For example, after measuring the full width at half maximum values of the peaks from the (101) plane, (102) plane, (104) plane, (105) plane and (107) plane appearing in the diffraction angle range, the acquired measurement values may be substituted into Equation 1 to acquire a slope through linear regression analysis, and thereby calculating the crystallite strain (Williamson-Hall method).

For example, the crystallite strain may be defined as a slope of a straight line obtained when plotting $\sin\theta$ on a horizontal axis and $\beta\cos\theta$ on a vertical axis in Equation 1.

In some embodiments, the crystallite strain may range from 0.2 to 0.4.

For example, when the crystallite strain is less than 0.2, an initial structural change of the lithium-nickel-based metal oxide particle may be large and a deterioration rate may be accelerated. Accordingly, the capacity retention rate of the lithium secondary battery may be deteriorated.

For example, when the crystallite strain is greater than 0.4, the Mn contained in the lithium-nickel-based metal oxide particles may not be sufficiently electrochemically activated. Accordingly, the initial efficiency and discharge capacity of the lithium secondary battery may be deteriorated.

In some embodiments, the crystallite strain of the lithium-nickel-based metal oxide particles may range from 0.25 to 0.38, from 0.28 to 0.38, from 0.32 to 0.36, or from 0.3 to 0.38. Within the above range, Mn may be electrochemically activated, and deterioration of the cathode active material may be delayed. Accordingly, the capacity characteristics and lifespan characteristics of the lithium secondary battery may be improved.

In one embodiment, a formation process, in which charging and discharging are performed on the lithium secondary battery for multiple cycles (times), for example, 2 to 5 cycles to develop its electrical characteristics, may be carried out. A driving process, in which charging and discharging are performed on the lithium secondary battery after undergoing the formation process for multiple cycles, for example, 3 to 5 cycles, may be carried out.

In some embodiments, a formation voltage applied to the lithium secondary battery in the formation process may be higher than a driving voltage applied to the lithium secondary battery in the driving process. For example, the magnitude of the formation voltage may be higher than that of the driving voltage by 0.03 V to 0.15 V, 0.03 V to 0.13 V, or 0.05 V to 0.1 V.

Within the above range of a difference in the magnitudes of the formation voltage and the driving voltage, the crystallite strain may be easily adjusted to the above-described range by a change of the crystallite size (Å) in Equation 1.

The characteristics (e.g., crystallite strain) of the lithium-nickel-based metal oxide particles according to the embodiments of the present disclosure are not necessarily dependent on the above-described conditions. For example, the above-described crystallite strain value may also vary by the variation in the crystallite size (Å) in Equation 1 due to other factors including the current rate during the charging and discharging process of the lithium secondary battery and the temperature during the formation process.

In exemplary embodiments, the above-described lithium-nickel-based metal oxide particles may be formed through a reaction of a lithium precursor and a transition metal precursor (e.g., a Ni-Co-Mn precursor).

For example, the transition metal precursor may be prepared through a co-precipitation reaction of metal salts. The metal salts may include nickel salts, manganese salts and cobalt salts.

Examples of the nickel salts may include nickel sulfate, nickel nitrate, nickel acetate, and a hydrate thereof. Examples of the manganese salts may include manganese sulfate, manganese acetate, and a hydrate thereof. Examples of the cobalt salts may include cobalt sulfate, cobalt nitrate, cobalt carbonate, and a hydrate thereof.

The metal salts may be mixed with a precipitant and/or a chelating agent in a ratio that satisfies the content or concentration ratio of each metal described with reference to Formulas 1 and 2 to prepare an aqueous solution. The aqueous solution may be co-precipitated in a reactor to prepare the transition metal precursor.

The precipitant may include an alkaline compound such as sodium hydroxide (NaOH), sodium carbonate ($Na_2CO_3$), etc. The chelating agent may include, for example, ammonia water (e.g., $NH_3H_2O$), ammonium carbonate (e.g., $(NH_4)_2CO_3$), etc.

The temperature of the co-precipitation reaction may be adjusted, for example, in a range of about 40 °C to 60 °C. The reaction time may be adjusted in a range of about 24 hours to 72 hours.

For example, the transition metal precursor may be reacted with a doping element source including a lithium precursor and a doping element to prepare lithium-nickel-based metal oxide particles. The lithium precursor compound may include, for example, lithium carbonate, lithium nitrate, lithium acetate, lithium oxide, lithium hydroxide, etc. These may be used alone or in combination of two or more thereof.

For example, the doping element source may include titanium dioxide, titanium butoxide, manganese sulfate hydrate, aluminum hydroxide, magnesium hydroxide, zirconium hydroxide, zirconium dioxide, yttria-stabilized zirconia, tungsten oxide, etc. These may be used alone or in combination of two or more thereof.

Thereafter, the metal particles may be fixed or crystallinity thereof may be increased through a heat treatment (calcination) process. In one embodiment, the heat treatment temperature may be about 600 °C to 1000 °C.

A slurry may be prepared by mixing the cathode active material including the above-described lithium-nickel-based metal oxide particles with a binder, a conductive agent and/or a dispersant in a solvent, followed by stirring the same. The slurry slurry may be applied to at least one surface of the cathode current collector 105, followed by drying and compressing to prepare the cathode 100.

For example, the cathode current collector 105 may include stainless steel, nickel, aluminum, titanium, or an alloy thereof. The cathode current collector may also include aluminum or stainless steel subjected to surface treatment with carbon, nickel, titanium, or silver. The cathode current collector may have a thickness of 10 μm to 50 μm, for example, but it is not limited thereto.

The coating process may be performed by methods such as gravure coating, slot die coating, simultaneous multilayer die coating, imprinting, doctor blade coating, dip coating, bar coating, casting, etc., but it is not limited thereto. The cathode slurry may further include a binder, and optionally may further include a conductive agent, a thickener or the like.

Non-limiting examples of the solvent may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode active material layer 110 and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$.

As the thickener, for example, carboxymethyl cellulose (CMC) may be used.

The anode 130 may include an anode current collector 125 and an anode active material layer 120 formed by coating the anode current collector 125 with an anode active material.

As the anode active material, any material known in the related art, so long as it can intercalate and deintercalate lithium ions, may be used without particular limitation thereof. For example, carbon-based materials such as crystalline carbon, amorphous carbon, carbon composites, carbon fibers, etc.; lithium metal; a lithium alloy; a silicon silicon (Si) compound or tin-containing material may be used.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon compound may include, for example, silicon (Si), silicon oxide (for example, SiOx, 0<x<2) or a silicon-carbon composite compound such as silicon carbide (SiC).

For example, a form of slurry may be prepared by mixing the anode active material with the above-described binder, conductive material, thickener, and the like in a solvent, followed by stirring the same. The slurry may be applied to at least one surface of the anode current collector 125, followed by drying and compressing to prepare the anode 130.

The coating process may be performed by methods such as gravure coating, slot die coating, simultaneous multilayer die coating, imprinting, doctor blade coating, dip coating, bar coating, casting, etc., but it is not limited thereto.

For example, non-limiting examples of the anode current collector 125 may include a copper foil, a nickel foil, a stainless steel foil, a titanium foil, a nickel foam, a copper foam, a polymer substrate coated with a conductive metal and the like. The anode current collector may have a thickness of 10 $\mu$m to 50 $\mu$m, for example, but it is not limited thereto.

Non-limiting examples of the solvent may include water, pure water, deionized water, distilled water, ethanol, isopropanol, methanol, acetone, n-propanol, t-butanol and the like.

The above-described materials that can be used when manufacturing the cathode as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

In some embodiments, the anode may include an anode active material layer in the form of a lithium metal formed through a deposition/coating process.

In one embodiment, a separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 $\mu$m to 20 $\mu$m, but in the present disclosure, it is not limited thereto.

In some embodiments, the anode 130 may have an area (e.g., a contact area with the separation membrane 140) larger than that of the cathode 100. Thereby, lithium ions generated from the cathode 100 may smoothly move to the anode 130 without being precipitated in the middle.

For example, the separation membrane 140 may include a porous polymer film made of a polyolefin polymer, such as an ethylene polymer, a propylene polymer, an ethylene/butene copolymer, an ethylene/hexene copolymer, and an ethylene/methacrylate copolymer, etc.

For example, the separation membrane 140 may include a nonwoven fabric formed of glass fibers having a high melting point, polyethylene terephthalate fibers and the like.

For example, an electrode cell may be formed by including the cathode 100, the anode 130 and the separation membrane 140. In addition, a plurality of electrode cells may be stacked to form an electrode assembly 150. For example, the electrode assembly 150 may be formed by winding, stacking, z-folding, or stack-folding of the separation membrane 140.

The electrode assembly 150 may be housed in the case 160 together with the electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)2^-$, $BF4^-$, $ClO_4^-$, $PF_6^-$, $(CF_3)_2PF_4^-$, $(CF_3)_3PF3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$

$(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility to the lithium salt and the additive, and does not have reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case to form electrode leads (a cathode lead 108 and an anode lead 128) extending or exposed to an outside of the case 160.

The lithium secondary battery may be manufactured, for example, in a cylindrical shape using a can, a square shape, a pouch shape or a coin shape.

## Example 1

### (1) Preparation of lithium-nickel-based metal oxide particles

$NiSO_4$, $CoSO_4$ and $MnSO_4$ were mixed in a molar ratio of 0.75:0:0.25, respectively, by using distilled water from which internal dissolved oxygen was removed by bubbling with $N_2$ for 24 hours. The mixed solution was introduced into a reactor at 50 °C, and NaOH as a precipitant and $NH_3H_2O$ as a chelating agent were added thereto, followed by performing co-precipitation for 72 hours to obtain $Ni_{0.75}Mn_{0.25}(OH)_2$ as a transition metal precursor. The obtained precursor was dried at 100 °C for 12 hours, and then again dried at 120 °C for 10 hours.

Lithium hydroxide and the transition metal precursor were added to a dry high-speed mixer in a ratio of 1.02:1 and uniformly mixed for 5 minutes. The mixture was put into a calcination furnace, and heated to 730 °C to 780 °C at a rate of 2 °C/min, then maintained at 730 °C to 780 °C for 10 hours. Oxygen was continuously passed at a flow rate of 20 mL/min during the heating and calcination. After completion of the calcination, the mixture was naturally cooled to room temperature, followed by pulverization and classification to acquire lithium-nickel-based metal oxide particles having a composition of $LiNi_{0.75}Mn_{0.25}O_2$.

### (2) Manufacture of lithium secondary battery

A lithium secondary battery was manufactured using the acquired lithium-nickel-based metal oxide particles as a cathode active material.

Specifically, the cathode active material, Denka Black as a conductive agent, and PVDF as a binder were mixed in a mass ratio of 97:2:1 to prepare a cathode slurry. The prepared cathode slurry was applied to an aluminum current collector, followed by drying and pressing the same to prepare a cathode.

An anode slurry, which includes 93 wt% of natural graphite as an anode active material, 5 wt% of flake type graphite (KS6) as a conductive material, 1 wt% of styrene-butadiene rubber (SBR) as a binder, and 1 wt% of carboxymethyl cellulose (CMC) as a thickener, was prepared. The anode slurry was applied to a copper substrate, followed by drying and pressing the same to prepare an anode.

The cathode and the anode prepared as described above were respectively notched in a predetermined size and stacked, then an electrode cell was fabricated by interposing a separator (polyethylene, thickness: 12 $\mu$m) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more.

As an electrolyte, a solution containing 1 M $LiPF_6$ dissolved in a mixed solvent of EC/EMC (20/80; volume ratio) was used.

Thereafter, pre-charging was performed on the lithium secondary battery manufactured as described above for 50 minutes at a current (5 A) corresponding to 0.24C. After about 12 hours, degasing was performed, and aging was conducted for more than 24 hours or more, then formation charging/discharging was performed (charging conditions: CC-CV 0.24C 4.30V 0.05C CUT-OFF, discharging conditions: CC 0.24C 2.5V CUT-OFF), and then additional shipment charging was performed on the secondary battery (charging conditions: CC-CV 0.24C 4.30V SOC30% CUT-OFF). The secondary battery shipped after the formation process was driven under the following charging/discharging conditions: (charging conditions: CC-CV 0.1C to 1C 4.25V 0.05C CUT-OFF, discharging conditions: CC 0.1C to 1C 2.5V CUT-OFF).

## Example 2

Lithium-nickel-based metal oxide particles and a lithium secondary battery were obtained in the same manner as described in Example 1, except that the conditions when performing formation charging/discharging were changed (charging conditions: CC-CV 0.24C 4.35V 0.05C CUT-OFF, discharging conditions: CC 0.24C 2.5V CUT-OFF).

## Example 3

A lithium secondary battery was obtained in the same manner as described in Example 1, except that the lithium-nickel-based metal oxide particles prepared by changing the mixing ratio of $NiSO_4$, $CoSO_4$ and $MnSO_4$ had a composition of $LiNi_{0.76}Co_{0.02}Mn_{0.22}O_2$.

## Example 4

A lithium secondary battery was obtained in the same manner as described in Example 1, except that the lithium-nickel-based metal oxide particles prepared by changing the mixing ratio of $NiSO_4$, $CoSO_4$ and $MnSO_4$ had a composition of $LiNi_{0.62}Co_{0.07}Mn_{0.31}O_2$.

## Comparative Example 1

Lithium-nickel-based metal oxide particles and a lithium secondary battery were obtained in the same manner as described in Example 1, except that the conditions when performing formation charging/discharging were changed (charging conditions: CC-CV 0.24C 4.25V 0.05C CUT-OFF, discharging conditions: CC 0.24C 2.5V CUT-OFF).

## Comparative Example 2

A lithium secondary battery was obtained in the same manner as described in Example 1, except that the lithium-nickel-based metal oxide particles prepared by changing the mixing ratio of $NiSO_4$, $CoSO_4$ and $MnSO_4$ had a composition of $LiNi_{0.64}Co_{0.06}Mn_{0.30}O_2$, and the conditions when performing formation charging/discharging were changed (charging conditions: CC-CV 0.24C 4.45V 0.05C CUT-OFF, discharging conditions: CC 0.24C 2.5V CUT-OFF).

The compositions of the lithium-nickel-based metal oxide particles of the above-described examples and comparative examples, and differences between the voltage during formation charging/discharging and the voltage during driving charging/discharging are shown in Table 1 below.

[TABLE 1]

| Item | Composition of lithium-nickel metal oxide particles | Voltage during formation charging | Voltage during driving charging | Difference between voltage during formation charging/discharging and voltage during driving charging/discharging |
|---|---|---|---|---|
| Example 1 | $LiNi_{0.75}Mn_{0.25}O_2$ | 4.3 V | 4.25 V | 0.05 V |

(continued)

| Item | Composition of lithium-nickel metal oxide particles | Voltage during formation charging | Voltage during driving charging | Difference between voltage during formation charging/discharging and voltage during driving charging/discharging |
|---|---|---|---|---|
| Example 2 | $LiNi_{0.75}Mn_{0.25}O_2$ | 4.35 V | 4.25 V | 0.1 V |
| Example 3 | $LiNi_{0.76}Co_{0.02}Mn_{0.22}O_2$ | 4.3 V | 4.25 V | 0.05 V |
| Example 4 | $LiNi_{0.62}Co_{0.07}Mn_{0.31}O_2$ | 4.3 V | 4.25 V | 0.05 V |
| Comparative Example 1 | $LiNi_{0.75}Mn_{0.25}O_2$ | 4.25 V | 4.25 V | 0 V |
| Comparative Example 2 | $LiNi_{0.64}Co_{0.06}Mn_{0.30}O_2$ | 4.45 V | 4.25 V | 0.2 V |

**Experimental Example**

(1) XRD analysis and crystallite strain measurement

The lithium secondary batteries of the examples and comparative examples were disassembled to obtain cathodes. XRD analysis was performed on the cathode active material layer included in the cathode, and peaks of (101) plane, (102) plane, (104) plane, (105) plane and (107) plane of the lithium-nickel-based metal oxide particles were measured.

The crystallite strain of the lithium-nickel-based metal oxide particles was calculated by applying the Williamson-Hall method defined by Equation 1 to the acquired peaks of the (101) plane, (102) plane, (104) plane, (105) plane and (107) plane, and calculation results are shown in Table 3 below.

[Equation 1]

$$\beta\cos\theta = \varepsilon\sin\theta + \lambda/D$$

(in Equation 1, $\beta$ is a full width at half maximum (rad) of the corresponding peak acquired through the XRD analysis, $\theta$ is a diffraction angle (rad), $\varepsilon$ is the crystallite strain (dimensionless number), $\lambda$ is an X-ray wavelength (Å), and D is a crystallite size (Å))

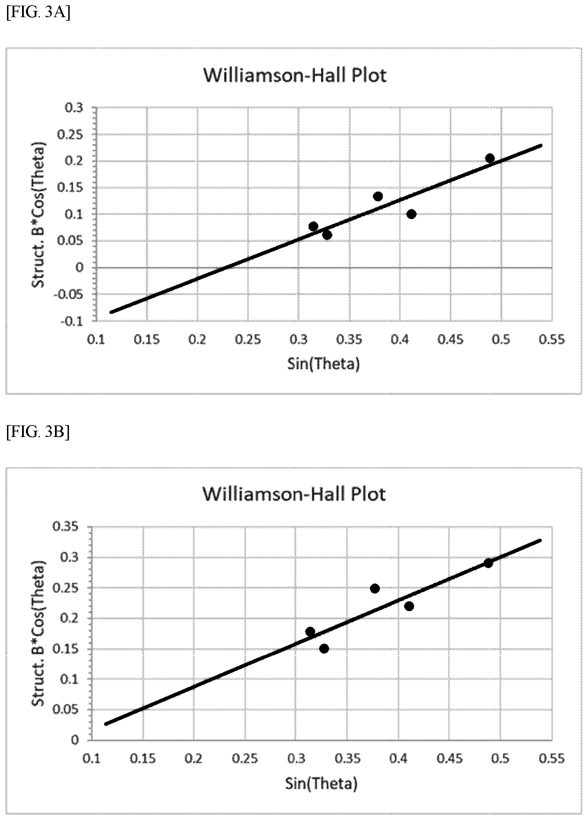

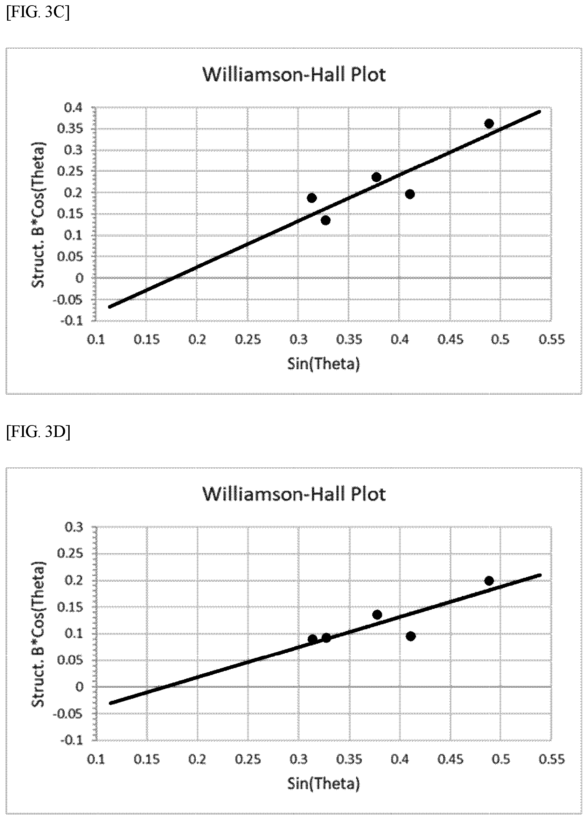

According to the above-described method, graphs illustrating slopes acquired through linear regression analysis by applying the Williamson-Hall method to peak values of (101) plane, (102) plane, (104) plane, (105) plane and (107) plane of lithium-nickel-based metal oxide particles, which are acquired by performing XRD analysis on cathode active material layers according to Examples 3 and 4, and Comparative Examples 1 and 2, are illustrated in FIGS. 3A to 3D.

Meanwhile, the specific XRD analysis equipment/conditions are described in Table 2 below.

[TABLE 2]

| XRD (X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.0065° |
| Divergence slit | 1/4° |
| Antiscatter slit | 1° |

(2) Measurement of discharge capacity

When performing driving charging and discharging on the lithium secondary batteries of the examples and comparative examples, the battery capacity (discharge capacity) after discharging was measured, and measurement results are shown in Table 3 below.

(3) Evaluation of high-temperature lifespan characteristics (45 °C)

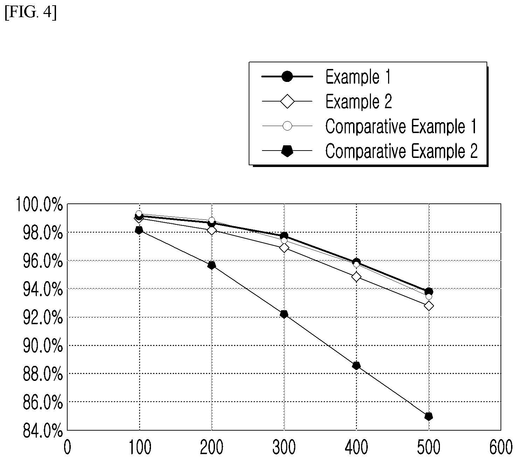

Driving charging and discharging were repeated 500 cycles (times) on the lithium secondary batteries of examples 1 and 2, and comparative examples 1 and 2, then the capacity retention rate was evaluated by a percentage of a value obtained by dividing the discharge capacities measured at 100th, 200th, 300th and 50th cycles by the discharge capacity at 1st cycle.
The capacity retention rates at 500th cycle are described in Table 3 below, and a graph illustrating the capacity retention rates of the lithium secondary batteries according to Examples 1 and 2, and Comparative Examples 1 and 2 are illustrated in FIG. 4.

[TABLE 3]

| Item | Crystallite strain | Discharge capacity (mAh/g) | High temperature lifespan[1] Capacity retention rate (%, 500th cycle) |
|---|---|---|---|
| Example 1 | 0.38 | 184.8 | 93.7 |
| Example 2 | 0.36 | 186.5 | 92.8 |
| Example 3 | 0.28 | 188.2 | - |
| Example 4 | 0.32 | 186.3 | - |
| Comparative Example 1 | 0.52 | 182.6 | 93.4 |
| Comparative Example 2 | 0.16 | 189.4 | 85.0 |
| [1] 45 °C | | | |

Referring to Table 3, the discharge capacity was high in the batteries of Examples 1 to 4 which used lithium-nickel-based metal oxide particles having a crystallite strain of 0.2 to 0.4, and the capacity retention rate was high in the batteries of Examples 1 and 2.
In the battery of Comparative Example 1 which used lithium-nickel-based metal oxide particles having a crystallite strain greater than 0.4, the discharge capacity was lower than in the batteries of Examples 1 to 4.
In the battery of Comparative Example 2 which used lithium-nickel-based metal oxide particles having a crystallite strain less than 0.2, the capacity retention rate was lower than in the batteries of Examples 1 and 2.

[Description of Reference Numerals]

100: Cathode
105: Cathode current collector
108: Cathode lead
110: Cathode active material layer
120: Anode active material layer
125: Anode current collector
128: Anode lead
130: Anode
140: Separation membrane
150: Electrode assembly
160: Case

**Claims**

1. A lithium secondary battery comprising:

    a cathode which comprises a cathode active material layer including a cathode active material containing lithium-nickel-based metal oxide particles; and
    an anode disposed to face the cathode,
    wherein the lithium-nickel-based metal oxide particles have a crystallite strain ($\varepsilon$) of 0.2 to 0.4, which is calculated by applying the Williamson-Hall method defined by Equation 1 below to peaks of (101) plane, (102) plane, (104) plane, (105) plane and (107) plane of the lithium-nickel-based metal oxide particles measured through XRD analysis on the cathode active material layer:

    [Equation 1]

    $$\beta\cos\theta=\varepsilon\sin\theta+\lambda/D$$

    (in Equation 1, $\beta$ is a full width at half maximum (rad) of the corresponding peak acquired through the XRD analysis, $\theta$ is a diffraction angle (rad), $\varepsilon$ is the crystallite strain (dimensionless number), $\lambda$ is an X-ray wavelength (Å), and D is a crystallite size (Å)).

2. The lithium secondary battery according to claim 1, wherein the crystallite strain of the lithium-nickel-based metal oxide particles is a slope of a straight line obtained when plotting $\sin\theta$ on a horizontal axis and $\beta\cos\theta$ on a vertical axis in Equation 1, by acquiring full width at half maximum values of the peaks from the (101) plane, (102) plane, (104) plane, (105) plane and (107) plane appearing through the XRD analysis, and substituting the acquired full width at half maximum values into Equation 1 above.

3. The lithium secondary battery according to claim 1 or 2, wherein the crystallite strain of the lithium-nickel-based metal oxide particles ranges from 0.25 to 0.38.

4. The lithium secondary battery according to claim 1 to 3, wherein the lithium-nickel-based metal oxide particles have a structure represented Formula 1 below:

    [Formula 1]     $Li_xNi_{1-y}M_yO_{2+z}$

    (in Formula 1, x satisfies $0.95{\leq}x{\leq}1.1$, y satisfies $0{\leq}y{\leq}0.7$, z satisfies $-0.1{\leq}z{\leq}0.1$, and M is at least one element of Na, Mg, Ca, Y, Ti, Sr, Hf, V, Nb, Ta, Cr, Mo, W, Mn, Co, Fe, Cu, Ag, Zn, B, Al, Ga, C, Si, Sn and Zr).

5. The lithium secondary battery according to claim 4, wherein in Formula 1, (1-y) ranges from 0.6 to 1.

6. The lithium secondary battery according to claim 4 or 5, wherein in Formula 1, M includes Mn.

7. The lithium secondary battery according to claim 1 to 6, wherein the lithium-nickel-based metal oxide particles have a structure represented by Formula 2 below:

    [Formula 2]     $Li_aNi_{1-b-c-d}Co_bMn_cJ_dO_{2+e}$

    (in Formula 2, a satisfies $0.95{\leq}a{\leq}1.1$, b satisfies $0{\leq}b{\leq}0.1$, c satisfies $0{\leq}c{\leq}0.4$, d satisfies $0{\leq}d{\leq}0.2$, e satisfies $-0.1{\leq}e{\leq}0.1$, and J is at least one element of Na, Mg, Ca, Y, Ti, Sr, Hf, V, Nb, Ta, Cr, Mo, W, Fe, Cu, Ag, Zn, B, Al, Ga, C, Si, Sn and Zr).

8. The lithium secondary battery according to claim 7, wherein in Formula 2, (1-b-c-d) ranges from 0.6 to 1.

9. The lithium secondary battery according to claim 7 or 8, wherein in Formula 2, b ranges from 0 to 0.02.

10. The lithium secondary battery according to claim 7 to 9, wherein in Formula 2, c ranges from 0.05 to 0.35.

11. The lithium secondary battery according to claim 7 to 10, wherein in Formula 2, c ranges from 0.2 to 0.33.

12. The lithium secondary battery according to claim 7 to 11, wherein in Formula 2, (1-b-c-d)/c is greater than 1.

[FIG. 1]

[FIG. 2]

[FIG. 3A]

[FIG. 3B]

[FIG. 3C]

[FIG. 3D]

[FIG. 4]

Europäisches
Patentamt

European
Patent Office

Office européen
des brevets

## EUROPEAN SEARCH REPORT

Application Number

EP 25 16 2414

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 957 607 A1 (SK INNOVATION CO LTD [KR]) 23 February 2022 (2022-02-23) * paragraphs [0097], [0093], [0094], [0099], [0020], [0113], [0048], [0009], [0117]; figure 4; table 3 * * paragraphs [0010], [0048], [0049] * * paragraphs [0032], [0033] * * paragraph [0015] * * paragraph [0016] * * paragraph [0094] * ----- | 1-12 | INV. H01M4/131 H01M4/505 H01M4/525 H01M10/0525 C01G53/50 H01M4/04 |

TECHNICAL FIELDS
SEARCHED (IPC)

H01M
C01G

The present search report has been drawn up for all claims

| Place of search | Date of completion of the search | Examiner |
|---|---|---|
| The Hague | 7 July 2025 | Mohsin, Ijaz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                 
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 25 16 2414

07-07-2025

| Patent document cited in search report | | Publication date | Patent family member(s) | | Publication date |
|---|---|---|---|---|---|
| EP 3957607 | A1 | 23-02-2022 | CN | 113644255 A | 12-11-2021 |
| | | | CN | 116230922 A | 06-06-2023 |
| | | | DE | 202021004476 U1 | 09-12-2024 |
| | | | EP | 3957607 A1 | 23-02-2022 |
| | | | KR | 102293046 B1 | 24-08-2021 |
| | | | US | 2022052332 A1 | 17-02-2022 |
| | | | US | 2023223527 A1 | 13-07-2023 |